# EUROPEAN PATENT APPLICATION

(11) **EP 0 993 149 A2**
(43) Date of publication of application: **12.04.2000**
(21) Application number: 99307960.7
(22) Date of filing: 08.10.1999
(51) Int. Cl.: H04L 12/28, H04L 12/56

(54) **Channel allocation method and apparatus**

(30) Priority: 09.10.1998 GB 9822145; 05.03.1999 GB 9905183
(71) Applicant: Inmarsat Ltd., London EC1Y 1AX (GB)
(72) Inventor: Howard, Chris Frank, Berkhamsted, Hertfordshire HP4 1ED (GB); Christodoulides, Louis Mimis, Kents Hill, Milton Keynes, MK7 6HS (GB); Febvre, Paul, Ipswich, Suffolk IP4 5HF (GB); Mudge, David Denis, London SW9 0LP (GB); Stabile, James, London NW9 7RF (GB)
(74) Representative: Cross, James Peter Archibald

(57) **Abstract**

A method for authenticating terminals in a wireless communication service involves receiving registration requests from terminals requiring access, transmitting to each of the terminals a signalling channel assignment signal allocating a duplex signalling channel uniquely to each terminal, transmitting in the signalling channel an authentication request signal, receiving an authentication response signal in the channel, the contents of which depend on the context of the authentication request signal, and deciding whether to allow access to the system according to the contents of the authentication response signal.

## Description

The present invention relates to a method and apparatus for allocating channels in a wireless communications system and particularly, but not exclusively, in a mobile satellite communications system.

In many wireless communications systems, there is a one-to-one correspondence between a logical channel, such as a voice channel or a data channel originating from a single application, and a physical channel, such as a single frequency channel, TDMA slot within a frame or CDMA code. This arrangement has the benefit of simplicity, but is inflexible and does not make the best use of the available bandwidth.

Alternative channel assignment systems have been proposed in which the bandwidth assigned to a logical channel can be varied according to demand, subject to the demands of other logical channels and the overall bandwidth available. One example of such a system is proposed in WO 98/25358.

Conveniently, the processes which assign bandwidth to different logical channels are implemented in a medium access control (MAC) layer which presents a standard interface to higher application layers and hides the management of physical channels from these higher layers. An example of a MAC layer for a mobile satellite system is disclosed in US 5689568.

According to one aspect of the present invention, there is provided a method of assigning channels to a plurality of wireless terminals, in which at least one signalling channel is assigned uniquely to each of the terminals on registration but prior to setting up any calls with that terminal. Preferably, the unique channel or channels is used for an authentication transaction with the wireless terminal prior to allowing calls to be set up with that terminal. Preferably, the unique channel has a quality of service which may be selected according to the requirements of that terminal, and/or is independent of the quality of service of any service communications channels assigned to that terminal.

According to another aspect of the present invention, there is provided a method of multiplexing channels onto a set of bearers in which the channels are multiplexed into groups and the groups are then collectively multiplexed onto the bearers. This provides an efficient and flexible way of allocating available capacity to a plurality of channels with different quality of service requirements.

The grouping of channels may be performed according to the quality of service requirements of the individual channels. For example, all channels requiring encryption may be grouped together, or delay sensitive channels may be grouped together with non-delay-sensitive channels.

A proportion of the total available bandwidth may be assigned to each of the groups, with this assignment being variable as the bandwidth requirements of the individual channels change, so as to match the available bandwidth to the bandwidth requirements of the channels.

Where a new channel is to be added to those already multiplexed onto the bearers, the new channel may be added to the group having an available quality of service specification that best matches the requirements of the new channel.

Where there are no groups which satisfy the requirements of the new channel, the channels assigned to one of the groups may be reduced to their minimum bandwidths so as to release bandwidth for the new channel.

Signalling information concerning the assignment of channels to groups and groups to bearers may be transmitted on one of the channels.

Traffic belonging to a channel may be identified by a channel label and data belonging to a group may be identified by a group label.

The group assignment of each channel may change, if there is surplus bandwidth available to one group and a bandwidth deficit for another.

Where there are multiple bearers, the channels may be multiplexed onto the minimum number of bearers needed to satisfy the bandwidth requirements of the channels.

The present invention extends to apparatus for carrying out the above-mentioned methods. This apparatus may be located in a base station for transceiving wireless bearers, and preferably in a satellite earth station.

Specific embodiments of the present invention will now be described with reference to the accompanying drawings, in which:
Figure 1 is a schematic diagram of a satellite communication system in which embodiments of the present invention may be implemented;
Figure 2 shows the protocol layers used by the MES and the LES in an embodiment of the present invention;
Figure 3 shows the mapping of individual MAC connections onto Bearer Connections in the embodiment;
Figure 4 shows the format of data passing through the MAC layer;
Figure 5 shows the specific functions of each of the sub-layers within the MAC layer;
Figure 6 shows the primitives used for communication between the MAC layer, Upper Data Link layer and Bearer layer;
Figure 7 shows an example in which four MAC/SAP handlers are connected to two Bearer Connections;
Figure 8 shows a first option for making additional bandwidth available to a MAC connection in the example shown in Figure 7;
Figure 9 shows a second option for making additional bandwidth available to a MAC connection in the example shown in Figure 7;
Figure 10 shows a third option for making additional bandwidth available to a MAC connection in the example shown in Figure 7; and
Figure 11 shows a fourth option for making additional bandwidth available to a MAC connection in the example shown in Figure 7.

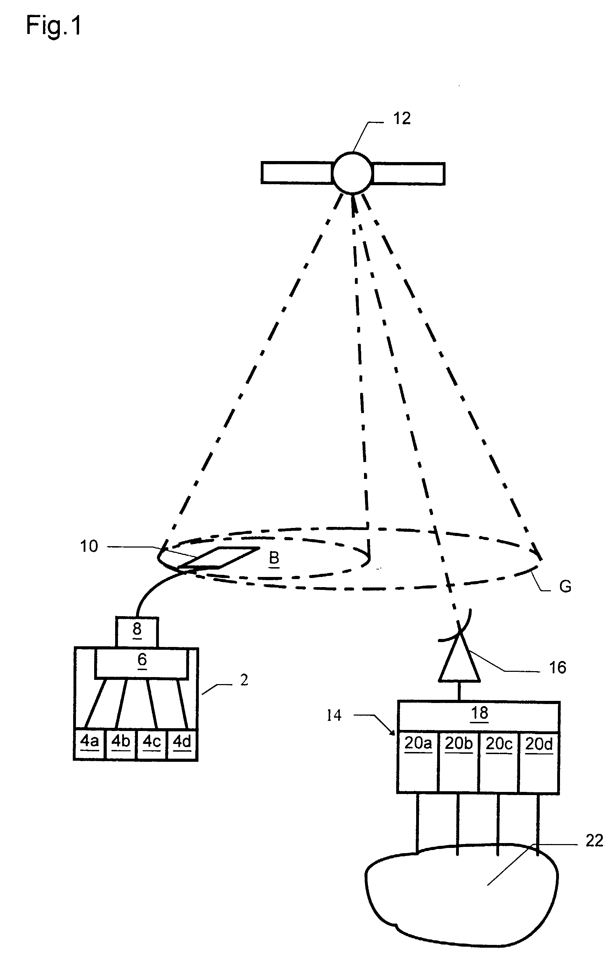

Figure 1 shows schematically a mobile terminal or Mobile Earth Station (MES) 2 connected via a satellite 12 to an LES 14, which connects the MES 2 to a terrestrial network 22. For example, the MES 2 comprises a portable computer on which a number of different communications applications 4a, 4b, 4c, 4d may be run. The applications may be a voice telephony application, an internet application, a facsimile application and an ATM application, and constitute an Upper Data Link Layer (UDLL). Driver software 6 running on the mobile terminal 2 operates MAC layer protocols as will be described in detail. The MES 2 provides a physical interface to an interface card 8, such as a PC card. The interface card 8 includes a radio frequency modulator/demodulator connected to an antenna 10. The radio frequency modulator/demodulator supports one or more simultaneous frequency channels for transmission or reception.

The antenna 10 is located within the coverage region of a spot beam B generated by the satellite 12, which may for example be a geostationary satellite having multibeam receive/transmit antennas for receiving and transmitting signals in each of a plurality of spot beams B. Each spot beam B carries a plurality of frequency channels both in the forward and return directions. The satellite also receives and transmits in a global beam G which has a coverage area extending substantially or completely over the coverage areas of the spot beams B. The global beam G carries at least one forward and one return frequency channel.

The RF signals transmitted between the antenna 10 and satellite 12 comply with an air interface protocol. The satellite 12 acts as a repeater and converts channels from multiple spot beams B into channels in a feeder beam F and *vice versa.* The feeder beam F provides a link between the satellite 12 and the LES 14 via an earth station antenna 16.

An LES MAC Layer 18 provides an interface between the satellite communications system and terrestrial networks 22, such as PSTN, ATM networks or ISDN, through gateway interfaces 20a to 20d, allowing multiple different types of communication to be set up over the satellite communication system, such as telephony, internet, fax and ATM. These applications may be run concurrently. The bandwidth allocated to each application may be varied independently in the forward and return directions during a call, as will be described below.

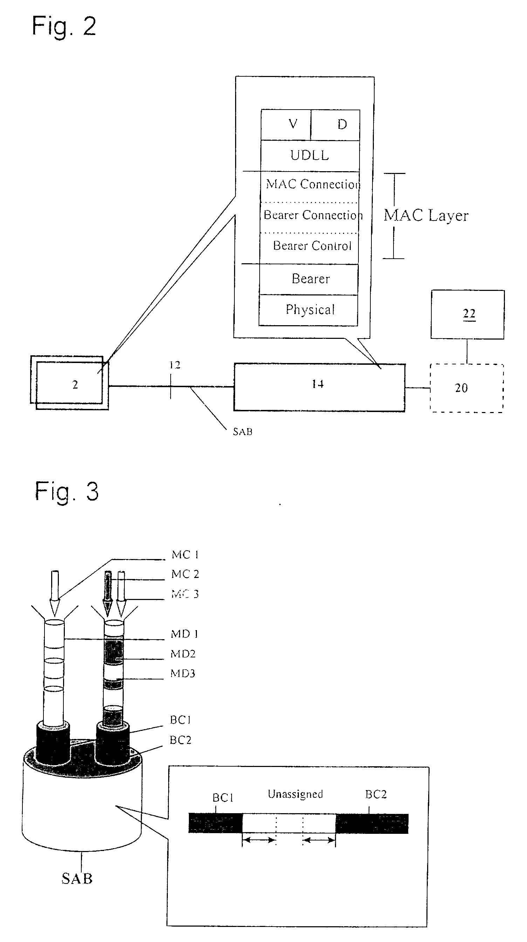

Figure 2 shows the protocol layers used by the MES 2 and the LES 14. One or more applications for voice V or data D communicate through an Upper Data Link Layer UDLL which maintains a single bi-directional signalling access point with the underlying MAC layer and a number of data access points, one for each active connection. The MAC layer assigns bandwidth and maintains quality of service (QoS) to each connection depending on connection parameters negotiated during a call set-up stage or renegotiated during a call. The term Quality of Service, as used herein, includes properties such as minimum bitrate, maximum delay, lifetime of data (i.e. whether data can be lost if not transmitted within a specified time), and encryption.

The MAC layer comprises three sub-layers: the MAC connection sub-layer, the Bearer Connection sub-layer and the Bearer Control sub-layer, each of which are described in greater detail below.

Below the MAC layer are a Bearer layer, which converts data intended for a bearer or physical channel to a format for that channel, and a Physical Layer which transmits the formatted data on the channel.

Figure 3 shows how individual MAC connections MC are mapped onto Bearer Connections BC so as to meet the Quality of Service requirements. A first MAC connection MC1 supplies bursts of data MD1 to a first Bearer Connection BC1, while access to a second Bearer Connection BC2 is shared in time between data MD2 from a second MAC connection MC2 and data MD3 from a third MAC connection MC3.

The first and second Bearer Connections BC1 and BC2 share a Shared Access Bearer SAB which is mapped onto a physical channel. The portion of the SAB assigned to each of the Bearer Connections BC varies according to the Quality of Service requirements of the underlying MAC connections MC, as shown on the right hand side of Figure 3.

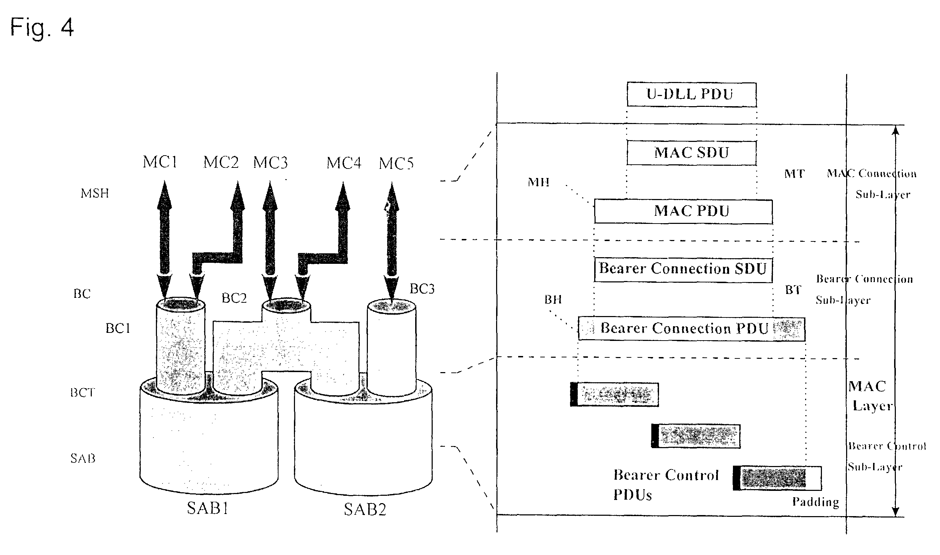

Figure 4 shows the format of data as it flows through the MAC layer. In the example shown, a second Bearer Connection BC2 has access to two Shared Access Bearers SAB 1 and SAB2, so as to support inverse multiplexing of MAC connections MC3 and MC4 onto more than one Shared Access Bearer.

A variable length UDLL protocol data unit UDLL PDU enters the MAC Connection sublayer as a MAC service data unit MAC SDU. In the MAC Connection sub-layer a MAC header MH and a MAC trailer MT, including a MAC identity code (ID) which identifies the corresponding MAC connection MC, is added to form a MAC protocol data unit PDU. The MAC PDU is passed to the Bearer Connection sub-layer as a Bearer Connection SDU. A Bearer Connection header BCH and trailer BCT are added to identify the Bearer Connection to which the SDU relates, to form a Bearer Connection PDU which is then passed to the Bearer Control sub-layer. There it is subdivided into Bearer Control PDU's suitable for transport over a physical layer. If the Bearer Control PDU's are of fixed size, padding bits are added where there is insufficient data to fill a Bearer Control PDU. A reverse set of operations is performed on received Bearer Control PDU's to convert them to UDLL PDU's for the higher level application.

The MAC connection sub-layer manages the creation, maintenance and eventual removal of the individual MAC connections MC. During call set-up, the LES 14 assigns a unique MAC identity code to each MAC connection MC and the MAC connection sublayer is subsequently responsible for identifying data blocks from different active connections and assigning the correct MAC identity code to them.

The Bearer connection sub-layer controls the multiplexing and inverse multiplexing of MAC connections MC to Bearer Connections BC according to the service requirements of the MAC connections. MAC connections with similar bearer service requirements are assigned to the same Bearer Connection BC. The Bearer Connection sub-layer also buffers data from the MAC connections and schedules the use of each Bearer Connection by the associated MAC connections so as to maintain the negotiated quality of service, such as the maximum delay and minimum bitrate, for each MAC connection.

For each Bearer Connection BC, an agreed Quality Of Service is set for transfer of data over the Shared Access Bearer SAB, which may be varied during the life of the Bearer Connection. The Bearer Control sub-layer manages access by the Bearer Connections BC to the Shared Access Bearers SAB according to the requirements of each Bearer Connection BC.

The allocation of MAC connections MC to Bearer Connections BC and of Bearer Connections BC to Shared Access Bearers SAB may be changed while the MAC connections MC and Bearer Connections BC respectively are active.

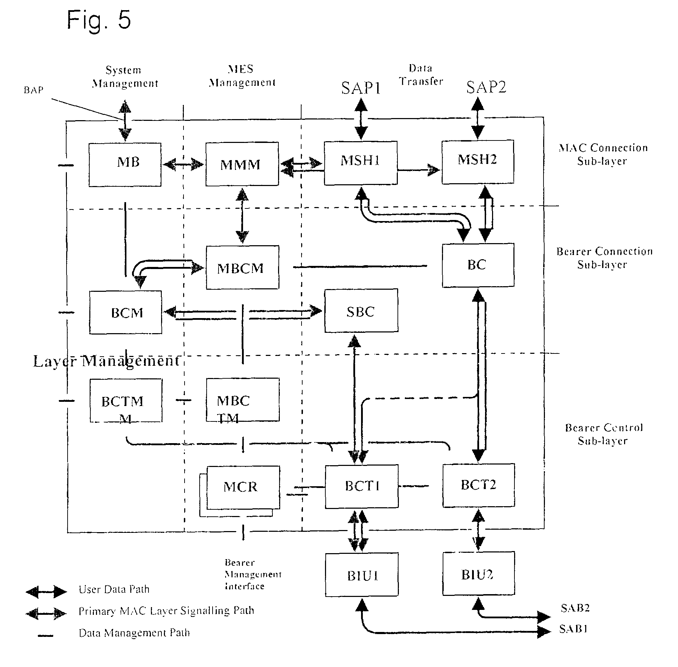

The specific functions of each of the sub-layers within the MAC layer at the MES 2 and the LES 14 are shown in more detail in Figure 5, with system management, MES management and data transfer functions being separated horizontally and the MAC Connection sub-layer, Bearer Connection sub-layer and Bearer Control sub-layer separated vertically. The MAC Layer signalling paths are shown in dark grey, the user data traffic paths are shown in black and the data management paths are shown in light grey.

Data traffic from each UDLL service access point SAP1, SAP2 is passed to a separate MAC/SAP Handler MSH1, MSH2 which routes the data traffic to an associated Bearer Connection BC. The Bearer Connection BC routes the traffic to the associated one or more Bearer Control functions BCT. The MAC layer of each MES 2 supports up to a predetermined number M of SAP Handlers MSH, up to a predetermined number N user data Bearer Connections BC, a Signalling Bearer Connection SBC specifically for handling MAC signalling traffic and one or more Bearer Control Functions BCT. Each Bearer Control BCT corresponds to a respective Shared Access Bearer SAB.

At both the MES 2 and the LES 14, the system management part of the MAC layer includes a MAC broker MB, a Bearer Connection Manager BCM and a Bearer Control manager BCTM, each of which is always active. Within the MES management layer there are, for each MES 2, an MES MAC Manager MMM, an MES Bearer Connection Manager MBCM, and an MES Bearer Control manager MBCTM; thus the MES MAC layer contains only one of each of these, while the LES MAC layer has one instance of each of these for each MES 2 which is logged on to the LES 14.

The MAC Broker MB forwards signalling information between a Broker Access Point (BAP), via the MES MAC Manager MMM, to one of the SAP handlers MSH or through the MES Bearer Connection Manager MBCM to the system management Bearer Connection Manager BCM which formats the signalling information into MAC layer signalling PDU's. These signalling PDU's are routed through the Bearer Control manager BCTM to one of the Bearer Control functions BCT. The signalling PDU's are differentiated from data PDU's by a signalling connection ID prefix. The MAC Broker MB at the LES 14 also assigns MAC connection ID's to the different MAC connections MC.

The Bearer Control Manager BCTM at both the LES 14 and the MES 2 is responsible for creating the Bearer Control functions BCT. At the LES 14, the Bearer Control Manager BCTM initially creates Bearer Control functions BCT to support intended types of service, prior to any MES's logging on to the LES 14. As each MES 2 will normally only be able to transmit and receive through a single Bearer Interface Unit BIU, it initially creates a Bearer Control function BCT which supports the Signalling Bearer Connection SBC, but may be unsuitable for certain types of data Bearer Connection BC. The LES 14 may later command the MES 2 to change to a more suitable type of Bearer Control function BCT.

The MES Bearer Control manager MBCTM at the LES 14 performs a brokering function when any change in the status of the Bearer Connections SBC, BC is required, for example to change the attachment of the Bearer Connection to the Bearer Controls BCT. The MES Bearer Control manager MBCTM polls each of the Bearer Control functions BCT at the LES 14 which could be supported by the associated MES 2, and the polled control functions BCT return an indication of whether they can support the revised Bearer Connection SBC, BC. According to the responses received, the MES Bearer Control manager MBCTM then indicates to the MES Bearer Connection Manager MBCTM which of the Bearer Control functions BCT should be attached to the revised Bearer Connection BCT.

The Bearer Connection Manager BCM is responsible for creating instances of the MES Bearer Connection Manager MBCM; one instance is created at the LES 14 for each logged on MES 2, while only one instance is created at the MES 2. The MES Bearer Connection Manager MBCM creates the data Bearer Connections BC. Each Bearer Connection BC is unidirectional, i.e. it only handles traffic in one direction, and can be attached to one or more MAC connections via corresponding SAP handlers MSH.

At the MES 2, zero or any number up to a predetermined maximum of data Bearer Connections BC may be in operation simultaneously, together with at least one Signalling Bearer Connection SBC. Separate data Bearer Connections SBC, BC may be used to support encrypted and unencrypted data. Alternatively, where an MES 2 has multiple transceivers and is able to support multiple simultaneous bearers, one data Bearer Connection BC may be assigned to each Bearer Control function BCT; MAC connections MC are assigned preferentially to a primary data Bearer Connection BC until the capacity of the associated primary bearer is reached, after which MAC connections MC are assigned to a secondary data Bearer Connection BC associated with a secondary bearer. In this way, the secondary bearer is used only when there is no spare capacity on the primary bearer, but individual connections can be switched between the bearers transparently to the applications for which the connections were created.

The multiplexed MAC connection data is passed from each Bearer Connection BC to the attached Bearer Control BC with a Bearer Connection label identifying the Bearer Connection BC, and the Bearer Control BCT determines to which portion of the underlying bearer to assign the Bearer Connection data according to this label. For example, where the bearer is a frequency channel and the Bearer Control BCT assigns time slots within the frequency channel, the Bearer Control BCT receives the bearer SDU's, which have been formatted to a fixed length, and transmits each bearer SDU in one of the time slots assigned to the corresponding Bearer Connection BC when that Bearer Connection BC was created or modified.

When the bearer PDU's are received at the remote end, the Bearer Control function BCT at that end assembles the PDU's and routes them to the correct signalling or data Bearer Connection SBC, BC according to the connection ID label included within them. The Bearer Connection BC then routes the data to the correct SAP handler MSH according to the MAC connection ID label included within the data. Where the data Bearer Connection BC has been set up to handle encrypted data, it performs a decrypting function on the data before passing it to the correct SAP handler MSH. The SAP handler MSH then sends the data through the UDLL to the appropriate application.

The Signalling Bearer Connection(s) SBC and the data Bearer Connection(s) BC may share access to a single Bearer Control BCT, so that signalling and message data are multiplexed onto the same bearer. Where an MES 2 supports multiple concurrent bearers, a Signalling Bearer Connection SBC may be attached to more than one Bearer Control BCT, so that signalling data is inverse multiplexed onto multiple bearers, or can still be transmitted on one bearer when another bearer is temporarily unavailable, for example when being retuned.

The functions of each of the parts of the MAC layer will be summarised below.

### MAC Broker

The MAC Broker MB supports the UDLL applications and has a broker access point (BAP) through which messages are passed between the applications and the MES MAC Manager MMM. The MAC Broker MB includes a database of supported UDLL services to determine whether a requested MAC connection MC can be supported.

The MAC Broker MB creates and manages the MES MAC Managers: at the MES 2, a single instance is created, while at the LES 14, one instance is created for each logged-on MES 2.

The MAC Broker MB also assigns a unique MAC identity code ID to each MAC connection during call establishment.

### SAP Handler

Each SAP handler provides a user data connection interface between a UDLL application and the attached data Bearer Connection and is associated with a single MAC identity code. The SAP handler maintains a state machine to determine the generation of and response to various signalling messages during a call, including timers to detect erroneous operation during a call.

The SAP handler encapsulates UDLL data into MAC PDU's including the associated MAC ID label, and buffers the data before sending it to the associated Bearer Connection. The SAP handler sends flow control data to the UDLL service to prevent more data being received if the buffer is full.

The SAP handler provides status information to the associated Bearer Connection, such as the fill level of its transmit data buffer. The Bearer Connection uses this information to adjust its scheduling of data between the SAP handlers attached to it. For example, if the transmit data buffer of one of the SAP handlers is full, and the maximum delay negotiated during the set-up of the corresponding MAC connection is likely to be exceeded, the Bearer Connection preferentially receives data from that SAP handler. If the Bearer Connection cannot meet the service requirements of all of the SAP handlers attached to it, it sends a message to the MES Bearer Connection Manager MBCM requesting a temporary increase in the allocation of capacity to that Bearer Connection by the Bearer Control function. The MES Bearer Connection Manager MBCM then determines, from the information received from each of the Bearer Connections, how to assign the bearer capacity available to each Bearer Control function between the different Bearer Connections.

For each SAP handler at an MES 2, there is a corresponding SAP handler at the LES 14. This pair of SAP handlers exists throughout the duration of the relevant call. Once a call has been terminated, the MAC ID associated with the SAP handler pair may be reassigned to another call when it is set up. Each SAP handler is able to process both received and transmitted data, although one of these is not used in simplex calls.

### MES MAC Manager

The MES MAC Manager MMM attempts to set up a local SAP handler when it receives a call set-up message from the local UDLL or from the remote MAC layer. The SAP handler is set up according to Quality of Service parameters supplied in the call set-up message, but in the case of a locally initiated call these parameters may be modified if the remote party signals that some of the Quality of Service parameters are not accepted. The Quality of Service parameters may include a maximum acceptable delay, which may be reduced if the remote party indicates a lower acceptable maximum, and may also include an indication of the type of encryption required. The newly created SAP handler is assigned a call label which is appended to data transmitted by the SAP handler before the call is accepted by the remote party, at which point the MAC ID is assigned. The call label is used to prevent the same application setting up multiple SAP handlers by making repeated call attempts before the call is accepted. When a local call set-up message is received from the UDLL, the MES MAC Manager MMM searches for existing SAP handlers having the same label value as the UDLL application, and sends the call set-up message to the existing SAP handler if the label values match.

The MES MAC Manager MMM also passes UDLL signalling messages between the MAC Broker MB and the appropriate SAP handler according to the call reference label, and forwards signalling between the MES Bearer Connection Manager MBCM and the SAP handlers.

### MES Bearer Connection Manager

The MES Bearer Connection Manager MBCM is created by the Bearer Connection Manager BCM; a single instance is created at the MES 2, while one instance per logged on MES 2 is created at the LES 14. The MES Bearer Connection Manager MBCM controls the attachment and detachment of MAC connections to Bearer Connections such that the MAC connection's Quality of Service requirements are met, and allows renegotiation of the attachments if the specified Quality of Service cannot be met.

The MES Bearer Connection Manager MBCM at the LES 14 is also responsible for creating Bearer Connections and requesting changes in their capacity. The MES Bearer Connection Manager MBCM also inserts the MES ID in signalling messages that it routes through the Bearer Connection Manager BCM so that they can be routed to the correct MES 2 or to the correct MES instance at the LES 14.

In one example, the MES Bearer Connection Manager MBCM attaches a MAC connection MC to a forward path (i.e. LES to MES) Bearer Connection. The LES MAC/SAP Handler MSH issues a request to the MES Bearer Connection Manager MBCM, via the MES MAC Manager MMM, to attach itself to an appropriate Bearer Connection BC. This request includes all of the forward and return path Quality of Service requirements for the MAC connection. The MES Bearer Connection Manager MBCM polls each of the Bearer Connections to request whether any of them are able to support the required quality of service. The Bearer Connections respond either by rejecting the connection, offering to accept unconditionally, or offering to accept conditionally on specified additional resources being made available to that connection.

The MES Bearer Connection Manager MBCM then determines whether any of the Bearer Connections offered to accept the connection and if so, which one to select. This selection takes account of whether any additional resources are needed by the Bearer Connections BC, and by their Quality of Service settings. For example, if a data encrypting Bearer Connection BC and a non-encrypting Bearer Connection BC both offer to accept the connection, the non-encrypting connection may be selected if data encryption is not necessary and a lower delay is preferable.

If no suitable existing Bearer Connection BC offers to accept the connection, the MES Bearer Connection Manager MBCM creates a new Bearer Connection BC. In this case, or if the only offer is conditional on more bandwidth being available, then the MES Bearer Connection Manager MBCM requests additional bandwidth from the MES Bearer Control Manager MBCTM, which assigns additional bandwidth as described below.

Provided that additional bandwidth is available, the MES Bearer Control Manager MBCTM informs the Bearer Connection Manager BCM, which in turn informs the Bearer Connection, that the additional capacity has been granted. The Bearer Connection updates its assigned capacity setting and its MAC connection scheduling to include the new MAC connection. The MES Bearer Connection Manager MBCM at the LES 14 then sends an *attach* message to the MES 2 over the Signalling Bearer Connection SBC, via the Bearer Connection Manager BCM. The message is passed to the relevant MAC/SAP Handler at the MES 2, which then instructs the corresponding MES Bearer Connection Manager MBCM to create or amend the capacity of the receiving Bearer Connection to match that of the transmitting Bearer Connection capacity at the LES 14. The MES 2 then sends an acknowledgement signal back to the LES 14 to allow the connection to move to its active state.

When a new MAC connection is set up at the MES 2 a similar procedure takes place, although the determination of allocation of bandwidth takes place at the LES 14, since the LES 14 always manages the allocation of bandwidth.

### Bearer Connection

Each Bearer Connection supports point-to-point unidirectional communications between an MES 2 and the LES 14 allowing groups of MAC connections to be passed between MAC/SAP Handlers MSH on the MES 2 and LES 14. Different Bearer Connections can be assigned different Quality of Service attributes and the groups of MAC connections are assigned to Bearer Connections according to their Quality of Service requirements. Data passed through a particular Bearer Connection is formatted as a Bearer Connection PDU labelled with an identifying Bearer Connection ID.

A transmitting Bearer Connection multiplexes MAC connections onto an underlying Shared Access Bearer, while a receiving Bearer Connection demultiplexes MAC PDU's and routes them to the appropriate MAC/SAP Handler using their MAC ID label. A transmitting Bearer Connection transfers the MAC connection PDU's according to its specific Quality of Service attributes. Bearer connections may also support data encryption and inverse multiplexing to more than one Shared Access Bearer.

The rate at which data is passed between a Bearer Connection and the underlying Bearer Control is determined by the bandwidth assignment by the Bearer Control for that Bearer Connection. The rate at which data is read from the connected MAC/SAP Handlers MSH by the Bearer Connection is also determined by the bandwidth assignment to that Bearer Connection, but the sequence of reading that data is determined by the Bearer Connection according to the instantaneous requirements and the negotiated quality of service of each of the MAC/SAP Handlers MSH.

When a new MAC connection is to be attached to a Bearer Connection, the Bearer Connection Manager BCM at the LES 14 polls each of the active Bearer Connections with an *attach* request, including information about the new MAC connection. Each Bearer connection returns one of three responses: *refused, accepted conditionally* or *accepted* *unconditionally,* dependent on whether that Bearer Connection is able to handle the new MAC connection. As described above, the MES Bearer Connection Manager MBCM then selects an existing Bearer Connection or creates a new one. If an existing Bearer Connection is selected, it is supplied with the MAC ID code for the new MAC connection, given access to the appropriate MAC/SAP Handler and adjusts its scheduling according to the MAC connection's Quality of Service details.

Each Bearer Connection also monitors the state of its associated MAC/SAP Handlers MSH, such as the level of their transmit buffers. If a particular MAC/SAP Handler's transmit buffer exceeds a certain threshold, the Bearer Connection may temporarily increase the bandwidth available to that MAC/SAP Handler, provided the Quality of Service requirements of the other connected MAC/SAP Handlers MSH is still met. However, if these requirements cannot be met, the Bearer Connection sends a request to the MES Bearer Connection Manager MBCM and thence to the MES Bearer Control Manager MBCTM to increase the allocated capacity of that Bearer Connection. The attachment of MAC connections to Bearer Connections and the aggregate bandwidth of the Bearer Connections is determined by the LES 14, although these may be adjusted in accordance with a request from an MES 2.

### Bearer Connection Manager

The Bearer Connection Manager BCM is responsible for the creation and deletion of the MES Bearer Connection Managers MBCM, Signalling Bearer Connections and broadcast Bearer Connections, creating a single MES Bearer Connection Manager MBCM at an MES 2 or a separate instance for each MES 2 at the LES 14. At the LES 14, the Bearer Connection Manager BCM uses the MES ID code to route signalling messages from the associated remote MES 2 to the corresponding instance of the MES Bearer Connection Manager MBCM at the LES 14.

The Bearer Connection Manager BCM at the LES 14 creates Signalling Bearer Connections so that MES's can contact the LES 14 to log on. The Bearer Connection Manager BCM at the MES 2 creates a default Signalling Bearer Connection SBC with a unique identity code, to provide signalling message transport between the MES 2 and the LES 14. The Signalling Bearer Connection SBC does not support data from the MAC/SAP Handlers MSH. All MAC layer signalling traffic passes through the Signalling Bearer Connection SBC to and from the Bearer Connection Manager BCM.

The Bearer Connection Manager BCM is able to reorder the assignment of MAC connections to Bearer connections and the assignment of Bearer Connections to bearers and can decide whether to reassign bandwidth if an MES Bearer Control Manager MBCTM has been unable to secure additional bandwidth, for example due to competition from other MES 2 entities.

When the Bearer Connection Manager BCM receives a request for bandwidth from an MES Bearer Connection Manager MBCM, it sends a command to a selected other MES Bearer Connection Manager MBCM which then sends a *revise* command to each of its associated Bearer Connections to reduce their capacity to a basic level defined when the Bearer Connection was set up. The *revise* commands are passed by the MES Bearer Control Manager MBCTM to the Bearer Controls BCT, which then support the basic levels of the attached Bearer Connections, thus freeing up bandwidth for MES Bearer Connection Manager MBCM which requested the additional bandwidth. The MES Bearer Control Manager MBCTM reports to the MES Bearer Connection Manager MBCM to confirm the availability of the additional bandwidth.

One of the MES Bearer Connection Managers is selected in turn to send the *revise* command, and a pointer is updated to indicate the next MES Bearer Connection Manager MBCM to be selected when a request for bandwidth is next received by the Bearer Connection Manager BCM. If the selected MES Bearer Connection Manager MBCM is not able to make sufficient bandwidth, the *revise* command is sent to the next MES Bearer Connection Manager MBCM indicated by the pointer and so on until sufficient bandwidth is made available. During the process of reclaiming bandwidth for a new Bearer Connection, other MES Bearer Connection Managers are prevented from requesting additional bandwidth for their Bearer Connections.

If insufficient bandwidth is available after all of the other MES Bearer Connection Managers have been sent the *revise* command, the MES Bearer Connection Manager MBCM requesting the bandwidth is informed that insufficient resources are available. If the bandwidth request is made during an attempt to set up a new MAC connection, the MAC connection is rejected.

### Signalling Bearer Connection

As described above, at least one instance of a Signalling Bearer Connection SBC exists at each MES 2 and at the LES 14, to connect the Bearer Connection Manager BCM to a Bearer Control. PDU's are addressed to the Signalling Bearer Connection SBC by means of a signalling ID code.

A single Signalling Bearer Connection SBC can be shared between multiple MES functions at the LES 14, because the signalling data to and from different MES's is distinguished by an MES ID label. Multiple Signalling Bearer Connections may be attached to different Shared Access Bearers. When an MES Bearer Connection is created, it is instructed which Signalling Bearer Connection SBC to use. Received signalling messages at the LES 14 are routed via the Bearer Connection Manager BCM to the appropriate MES Bearer Connection Manager MBCM specified by the signalling message's MES ID.

Two specific types of signalling connection will now be described.

### Common Signalling Connection

The LES 14 always maintains at least one common signalling bearer connection CSBC for communication in each direction, both from and to multiple MES's 2. The common signalling bearer connection CSBC is used where no other logical channel has yet been established, or no other channel is available.

In the MES to LES direction, transmissions through the common signalling bearer connection CSBC are performed by random access, since there is no allocation of capacity in this connection by the LES. These transmissions may be requests for capacity for other connections, or requests for registration. The MES 2 to which a particular transmission relates is indicated using an MES ID field.

In the LES to MES direction, the common signalling bearer connection CSBC is used for broadcast communication, with no MES ID specified, or for allocating return schedules to MES's, with the MES ID used to specify to which MES 2 the return schedule relates.

### MES Specific Signalling Bearer Connection

An MES-specific signalling bearer connection MSBC is set up at an MES 2, and correspondingly at the LES 14, during registration of that MES 2. The LES 14 assigns a bearer connection ID and attaches a bearer to the MES-specific signalling bearer connection during the registration process, and may optionally assign a maximum duration and maximum idle period to the connection. If a maximum duration and maximum idle period are specified by the LES 14, then in the event that the maximum duration expires, or the maximum idle period expires without the MES 2 having set up any service connections, the LES 14 cancels the connection and the MES 2 must re-register. The MES-specific signalling bearer connection MSBC is used for secure communication between the MES 2 and the LES 14 such as an authentication exchange, as described below.

The MES-specific signalling bearer connection provides a dedicated logical channel for which QoS parameters are selected according to the type of the MES 2. For example, if the MES 2 has multiple transceivers, it may be expected that greater signalling capacity will be needed than if the MES 2 had only a single transceiver, and the QoS will specify a high signalling capacity.

### Broadcast Bearer Connection

A Broadcast Bearer Connection is a type of Signalling Bearer Connection SBC which is created by the Bearer Connection Manager BCM to support broadcast communication from the LES 14 to multiple MES's 2. Therefore, a single transmitter broadcast Bearer Connection at the LES 14 is associated with multiple receiver broadcast Bearer Connections, one at each receiving MES 2. The identities of the receiving MES's 2 are established during the set-up of the Broadcast Bearer Connection, so that data can be multicast to a closed group of MES's 2. If confirmation of receipt of broadcast messages by the MES's is required, return connections for each of the MES's are set up.

The transmitter broadcast Bearer Connection can replicate Bearer Connection PDU's and transfer them to separate Bearer Controls BCT, so that messages can be broadcast on multiple bearers.

### Bearer Control Manager

The Bearer Control Manager BCTM creates, monitors and deletes Bearer Control functions and creates a single MES Bearer Control Manager MBCTM at each MES 2, and a separate MES Bearer Control Manager MBCTM instance at the LES 14 for each logged-on MES 2.

At the LES 14, the Bearer Control Manager BCTM creates multiple different Bearer Controls BCT supporting different services compatible with the underlying bearer types, according to the distribution of types of MES 2 and the service most often required, such as single channel per carrier (SCPC) or packet data. At least one Bearer Control must be accessible by all MES's for signalling traffic. As MES's typically only have access to one bearer at a time, the Bearer Control Manager BCTM at the MES 2 creates and removes Bearer Controls BCT when it is necessary to move to a Shared Access Bearer using a different frame format, under instruction of signalling from the LES 14.

### MES Bearer Control Manager

The Bearer Control Manager BCTM creates a single instance of the MES Bearer Control Manager MBCTM connected between the MES Bearer Connection Manager MBCM and the MES Channel Resource MCR or resources. At the MES 2, the only function of the MES Bearer Control Manager MBCTM is to inform the MES Channel Resource MCR which Bearer Control has been currently selected to operate with the corresponding Bearer Interface Unit.

However at the LES 14, the MES Bearer Control Manager MBCTM determines to which Bearer Control to assign Bearer Connections when the Bearer Connections are created or their capacity is changed. In both cases the MES Bearer Control Manager MBCTM interrogates for the relevant MES 2 all of the local transmit or receive MES channel resources, depending on the direction of the Bearer Connection, to determine what Bearer Control types can be supported by the corresponding MES Channel Resource MCR at the MES 2, and which Bearer Control is currently being used by that MES Channel Resource MCR, if any. The MES Bearer Control Manager MBCTM determines from this which of the active Bearer Controls BCT at the LES 14 which can be supported by the MES 2 and sends to each of these a Bearer Connection *attach* message.

The Bearer Connection *attach* message indicates the Bearer Connection type and its requested capacity. In response, each Bearer Control returns either a *refused, qualified acceptance* or *unqualified acceptance* response. A *refused* message is generated if there is no bandwidth to support the Bearer Connection or if the Bearer Control determines that the Bearer Connection type is incompatible with the service categories supported by the Bearer Control. The *unqualified acceptance* response indicates that the Bearer Connection can be supported with the Quality of Service requirements specified. The *qualified acceptance* response indicates that the Bearer Connection can only be supported at a lower Quality of Service level than that requested. Optionally, the *qualified acceptance* may indicate that the Bearer Connection could be supported with a greater Quality of Service than requested, allowing the Bearer Connection to take advantage of the greater Quality of Service if required.

The MES Bearer Control Manager MBCTM then selects one of the Bearer Controls BCT for attachment to the Bearer Connection according to the responses and also determines whether one of the Bearer Controls BCT can be removed in favour of another. The MES Bearer Control Manager MBCTM can also request the Bearer Control Manager BCTM to retune the Bearer Control to a different frequency. The selected means of supporting the Bearer Connection is then indicated to the MES Bearer Connection Manager MBCM.

### MES Channel Resource

At an MES 2 a separate MES Channel Resource MCR is created for each Bearer transmitter and receiver. During initialisation, the MES Channel Resource MCR is informed of all the Bearer Control classes that are supported by its associated Bearer transmitter and receiver. The MES Channel Resource MCR is connected to the MES Bearer Control Manager MBCTM and the Bearer Control which is assigned to its bearer interface.

When the MES 2 logs on to the LES 14 using a default signalling channel available to all the MES's, it provides the LES 14 with details of the MES's transmitter and receiver capabilities and what types of Bearer Controls BCT these can support. The LES 14 creates a Bearer Control sub-layer for this new MES 2, including a set of local MES Channel Resource MCR instances corresponding to these supported Bearer Controls BCT. In this way, the LES 14 determines how many bearers a particular MES 2 can access concurrently, what Bearer Control types can be operated and what Bearer Control type is currently operational. The MES Channel Resources MCR also contain power, frequency and timing information for the associated bearer. Initially, the LES 14 assumes that at least one pair of transmit and receive MES 2 channel resources will be active and uses the default Bearer Control type already used for signalling to the LES 14.

Later, when a Bearer connection is assigned to a Bearer Control or the capacity of an existing Bearer connection is altered, as requested by the MES Bearer Connection Manager MBCM at the LES 14, the MES Bearer Control Manager MBCTM refers to the MES Channel Resource MCR associated with the MES 2 and obtains the identity of the currently operational Bearer Control, its assigned channel frequency and the set of possible Bearer Control types it can support. The MES Bearer Control Manager MBCTM determines from this information whether to select an alternative Bearer Control function or to retune the MES 2. At both the MES 2 and the LES 14, the MES Channel Resource MCR controls the functions of the underlying bearer. There is a dedicated interface between the MES Channel Resource MCR and the underlying bearer for the exchange of timing, frequency and power control data.

### Bearer Control

Each Bearer Control BCT provides access to a specific Shared Access Bearer for one or more Bearer Connections BC. At the LES 14, these Bearer Connections can be associated with different MES instances. At its upper interface, the Bearer Control BCT receives Bearer connection PDU's from the Bearer Connections BC and maps these into the Bearer Control PDU's which it forwards to the bearer for insertion in the appropriate Shared Access Bearer channel. In the reverse direction it extracts Bearer Connection PDU's from received bearer PDU's for transfer to the appropriate Bearer Connection instance identified by the Bearer Connection ID.

Bearer Controls BCT are created during initialisation by the Bearer Control Manager BCTM at both the LES 14 and the MES 2. As the LES 14 can support many concurrent Shared Access Bearers, Bearer Controls BCT are not frequently reassigned. However, if the MES 2 has only a single transceiver, it may need to switch Bearer Controls BCT while it is logged on to the LES 14 depending on the format of the Shared Access Bearer on which it is instructed to transport its one or more Bearer Connections. Bearer Controls BCT will typically support multiple Bearer Connections with dissimilar transport Quality of Service requirements at the same time, so that the transmitter Bearer Control includes a scheduling function to determine when to read each Bearer Connection in order to obtain its PDU's for transmission, at a rate agreed when the Bearer Connection is attached to the Bearer Control.

Only the Bearer Controls BCT at the LES 14 are capable of responding to *attach* requests and *revise* messages from either the Bearer Control Manager BCTM or an MES Bearer Control Manager MBCTM. As these Bearer Controls BCT can determine the usage of the underlying Shared Access Bearers, they can determine whether sufficient bandwidth is available to provide the Bearer Connection with the bandwidth it has requested, or if not, how much bandwidth can be assigned to it. This decision may also take into account the type of the requesting Bearer Connection because certain Bearer Controls BCT may be capable of statistical multiplexing of non-real-time Bearer Connections into a common channel or supporting hybrid framing schemes with different access protocols operating in separate portions of the bearer frame. The Bearer Controls BCT then prepare an *attach* response message for sending to the MES Bearer Connection Manager MBCM for user data Bearer Connections, or for sending to the Bearer Connection Manager BCM, for signalling or broadcast Bearer Connections. The response, as previously described, can be *refused, qualified acceptance,* or *unqualified acceptance.*

### Shared Access Bearer

The Shared Access Bearers SAB are mapped onto physical channels over the satellite 12. The physical channels may be SCPC channels, TDMA slots, CDMA codes, or a range of slotted Aloha slots. The Bearer Control BCT associated with each Shared Access Bearer SAB provides information to the Bearer Connections BC on the Quality of Service characteristics of the underlying physical channel such as delay, bandwidth and bit error rate.

Advantageously, multiple Shared Access Bearers SAB corresponding to multiple different physical channel types are provided at the MES 2 and LES 14, so as to match the requirements of the different MAC connections MC. For example, the channel types supported at the LES 14 may include a combination of transmitted SCPC channels, received TDMA slots and received slotted Aloha slots to support high speed downloads, data requests and random call set-up requests respectively. New channel types may be added while allowing continued use of existing channel types.

### Authentication

Before being allowed access to any of the services of the LES 14, the MES 2 must first register with that LES 14. To prevent access by unauthorised MES's 2, an authentication protocol is initiated during or subsequent to the completion of the registration process.

The MES 2 sets up a common signalling bearer connection CSBC which is attached to a bearer specified by the LES 14 in a broadcast channel, and transmits a registration request packet through the common signalling bearer connection CSBC. In response to the registration request packet, the LES 14 assigns a duplex MES-specific signalling channel to the MES 2 by transmitting an allocation schedule in the broadcast channel. Duplex MES-specific signalling bearer connections MSBC are set up at the MES 2 and at the LES 14.

In the MES-specific signalling channel, the LES 14 transmits a "challenge' packet in the form of a header and a random number. The MES 2 operates on the random number using a code or key stored within the MES 2, such as on a smart card, and transmits the result of the operation in the MES-specific signalling channel. The LES 14 performs the same operation using a copy of the code or key specific to that MES 2, the copy being stored securely within the LES 14, and compares the result of the operation with that transmitted by the MES 2. If the results are the same, the LES 14 transmits a confirmation packet to the MES 2 indicating that the registration was successful and maintains the MES-specific signalling bearer connection for use in subsequent signalling with the MES 2, for example when allocating capacity for service connections. Otherwise, a failure indication is sent to the MES 2 and the MES-specific signalling bearer connection MSBC is cleared.

In another embodiment of the invention, the authentication of the MES 2 takes place via the MES-specific signalling channel whenever the MES requests the establishment of a data bearer connection. This embodiment of the invention allows independent authentication of the MES 2 by different service providers if these service providers are not the operators of the LES 14.

### Call Management

An example of a message sequence for setting up a simple telephone call initiated by an MES 2 to an LES 14 will now be described.

A user telephony application running at the MES generates a UDLL call set-up message indicating the type of service required and a call reference, which are passed through the Broker Access Point to the MAC Broker MB. The MAC Broker MB forwards the set-up request to the MES MAC Manager MMM which prepares a set of Quality of Service parameters appropriate for this type of connection. The MAC Broker MB then creates a MAC/SAP Handler MSH configured according to the Quality of Service requirements and forwards the call set-up message to this MAC/SAP Handler MSH. The call set-up message is then passed through to the Bearer Connection Manager BCM and via the MES MAC Manager MMM to the MES Bearer Connection Manager MBCM, which prepares an *establish request* signalling message. This message is transferred to the remote LES 14 via the Signalling Bearer Connection SBC.

The Bearer Connection Manager BCM at the LES 14 decodes the *establish request* and routes it using the MES ID label to the appropriate MES Bearer Connection Manager MBCM, which in turn forwards the *establish request* to the MES MAC Manager MMM. The MES MAC Manager MMM examines the *call reference* label to see whether a MAC/SAP Handler MSH already exists for this call. If this is not the case, the MES MAC Manager MMM creates a new MAC/SAP Handler MSH and initialises this based on the Quality of Service parameters held in the *establish request* signalling message; this message is forwarded to the newly created MAC/SAP Handler MSH and also to the MAC Broker MB where an authorisation check is performed to see whether the requested type of service has been registered with that terminal. If so, the set-up message is passed through the Broker Access Point BAP to the UDLL application of the called party.

If the called party accepts the call, the LES MAC Broker MB assigns the call to a new MAC ID. Once the MAC/SAP Handler MSH is informed that the call is accepted, it sends an *establish acknowledgement* message back to the originating MES 2 to indicate that the connection has been accepted, and sends a pair of *attach request* messages to the underlying MES Bearer Connection Manager MBCM to find suitable Bearer Connections BC for the forward and return paths. The *establish acknowledgement* message passes from the MAC/SAP Handler MSH, MES MAC Manager MMM, MES Bearer Connection Manager MBCM and Bearer Connection Manager BCM to the Signalling Bearer Connection SBC where the message is formatted in a Bearer Connection PDU and prefixed by a Signalling Bearer Connection ID. At the MES 2, the Bearer Control forwards the Bearer Connection PDU through to the Signalling Bearer Connection SBC using the Signalling Bearer Connection ID. The message is then forwarded to the Bearer Connection Manager BCM where the message content is extracted, including the newly allocated MAC ID and passed to the appropriate MAC/SAP Handler MSH. An acknowledgement signal is then forwarded to the UDLL application through the MAC Broker MB indicating that the connection has been established and the address of the data SAP MSH. However, no resources have yet been committed to the new MAC connection.

When the MES Bearer Connection Manager MBCM receives the pair of *attach request* messages for the forward and return path Bearer Connections BC, it polls each of the Bearer Connections BC to determine whether sufficient resources are available either conditionally or unconditionally on an existing Bearer Connection. It also has the option of creating a new Bearer Connection BC if no suitable one exists. If either no suitable Bearer Connection BC exists or the capacity of an existing one has to be amended in order to accommodate the new MAC Connection, the MES Bearer Connection Manager MBCM then asks the underlying MES Bearer Control Manager MBCTM to locate a suitable Bearer Control BCT which can support the new or revised Bearer Connection BC. Assuming the additional capacity is found for a new Bearer Connection BC, then the MES Bearer Connection Manager MBCM creates the Bearer Connection BC and links it to the appropriate MAC/SAP Handler MSH at its upper interface and Bearer Control BCT, at its lower interface. If, however, there are insufficient resources on any appropriate Bearer Controls BCT as defined by the MES Channel Resources MCR, then the MES Bearer Connection Manager MBCM can request the generic Bearer Connection Manager BCM to perform bandwidth consolidation to free up capacity that may be being used for low priority dynamic allocation. However, once Bearer resources have been assigned to both the forward and return path Bearer Connections BC , the forward path Bearer Connection BC determines how its scheduling operation should be updated to accommodate the new MAC Connection.

Once the forward and return Bearer Connection resources have been assigned to the new MAC Connection at the LES 14, the LES 14 must inform the MES 2 of what Bearer resources have been allocated to the new MAC Connection. This is initiated by the MES Bearer Connection Manager MBCM at the LES 14 once it has received confirmation from the MES Bearer Control Manager MBCTM that both the new/revised forward and return Bearer Connections BC can be supported on suitable Bearer Control(s) BCT. At this time the LES 14 sends a pair of *attach request* messages for the forward and return path Bearer Connections BC to the remote MES 2 where they are passed to the calling MAC/SAP Handler MSH. This generates a pair *of attach response* messages which are passed down to the MES's MES Bearer Connection Manager MBCM which amends or creates suitable Bearer Connections BC for the forward and return path. Messages are then passed down to the MES Bearer Control Manager MBCTM instructing it to assign the appropriate capacity to the return path Bearer Connection BC and informing it of the forward path Bearer Connection ID if it is a newly created Bearer Connection. The MES Bearer Connection Manager MBCM returns the *attach acknowledgement* message to the MAC/SAP Handler MSH on the LES 14 to indicate that the underlying bearer resources have now been made available for the new MAC Connection and so data transmission can commence.

Call termination may be started by either the calling MES 2 or the called LES 14. In either case the release operation of the application causes the generation of a *disconnect* message which is passed through to the remote end MAC Layer. The releasing party immediately disables local higher-layer access to the MAC/SAP Handler MSH to prevent data transfer once any part of the connection infrastructure is discontinued, but the MAC/SAP Handler MSH is not removed until the far-end acknowledges the call release. For an MES initiated release, the LES 14 release acknowledgement may also include a revised Bearer Control Shared Access Bearer resource allocation. For LES 14 initiated release, the release request contains this data.

### MAC Connection Management

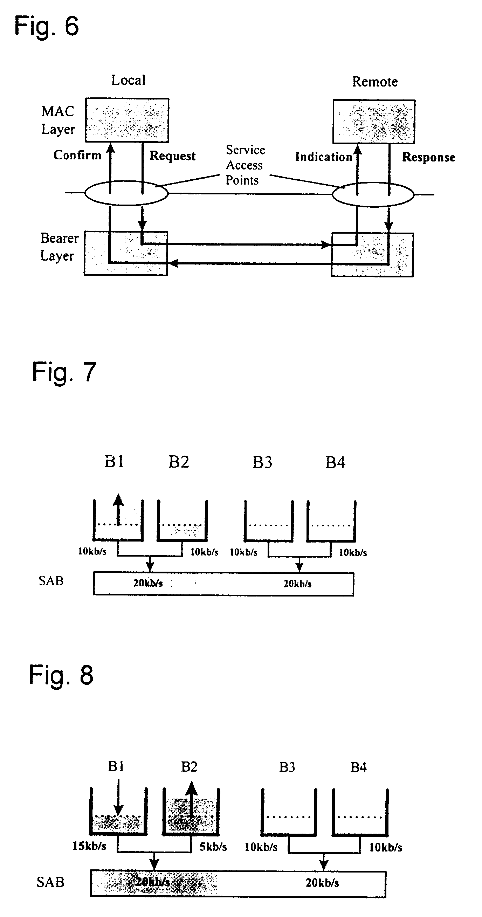

Communication between the MAC Layer and the Upper-Data Link Layer (UDLL), Bearer Layer and the layer management is accomplished by using primitives representing the logical exchange of information. The four main classes of primitives are shown in Figure 6. Their definition is as follows:
- **Request**: Used when a higher layer or layer management requests a service from a lower layer
- **Indication**: Used by a layer providing a service to inform the higher layer or layer management
- **Response**: A response to an **Indication**
- **Confirm**: Used by a layer providing the requested service to confirm that an activity has been completed

MAC Layer communication takes the generic form of a *request* which is passed down through a Bearer Interface Unit Service Access Point (SAP) to the underlying Bearer Layer where it is transmitted to the remote end. In practice, the message is first organised into one or more Bearer PDU's and transmitted at the Physical Layer. At the remote end, the Bearer forwards the message up to the MAC Layer through a Bearer Interface Unit SAP as an *indication.* Based upon the nature of the indication, the remote end MAC Layer process will issue a response, which is passed down through the Bearer SAP at the *remote* end. This is then passed back to the originating entity and forwarded by the local Bearer up to its own MAC Layer as a *confirm* class of message.

MAC Connection management requires the involvement of three processes: the MAC Broker MB, the MES MAC Manager MMM and the MAC/SAP Handler MSH. The MAC Broker MB is the single signalling point used by UDLL services for requesting MAC Connection resources. If appropriate, it forwards the requests to the MES MAC Manager which creates a MAC/SAP Handler MSH which will maintain the MAC Connection state-machine to control the subsequent behaviour of the MAC Connection. It is this MAC/SAP Handler MSH that then initiates the call set-up request to the remote end, and processes all of the MAC Connection signalling responses. At the remote end, an associated MAC/SAP Handler instance MSH is created by its MES MAC Manager MMM. This also contains a MAC Connection state-machine which will cause it to forward the call request to its MAC Broker MB and process the subsequent response. The MAC Broker MB determines whether the new MAC Connection request is of a type that is supported by the UDLL and, if so, the call request is passed to the appropriate UDLL application.

If the UDLL application refuses the connection request, when the MAC/SAP Handler MSH is informed, it instigates a call release procedure between itself and the MAC/SAP Handler MSH at the calling party end concluding in both MAC/SAP Handlers terminating. However, if the call is accepted, the called party MAC/SAP Handler MSH sends a confirmation to the calling party end to complete the call establishment. Furthermore, the MAC/SAP Handler which is located at the LES 14 initiates a request for the underlying Bearer Connection resources to support the new MAC Connection. If the resources are available, both MAC/SAP Handlers are freed from a flow-controlled call state and exchange of user data can commence. Failure to find the underlying Bearer Connection resources results in the LES MAC/SAP Handler issuing a MAC Connection release, with a suitably assigned call release code.

### Bearer Connection Management

Bearer Connection Management is performed in an ascending hierarchical order by the Bearer Connections BC, MES Bearer Connection Manager(s) MBCM and the generic Bearer Connection Manager BCM. The Bearer Connections BC are responsible for appropriately scheduling the reading operation of the MAC Connections. They are also responsible for initiating the attachment process when attempting to accept new MAC Connections and the issuing of *revise* messages in response to the instantaneous status of the MAC/SAP Handler transmit buffers in order to dynamically adjust the capacity of the Bearer Connections BC.

In order to move a MAC connection from one Bearer Connection BC to another without risk of loss or duplication of data, each end needs to know that all buffered data has been sent and received. Under the instruction of the MES Bearer Connection Manager MBCM, the Bearer Connection BC can insert special "flush" control messages into the data PDU stream as it is passed down to the Bearer Control BCT. As Bearer Connections BC are unidirectional, flush messages are turned-around at the remote end by the MES Bearer Connection Manager MBCM and inserted into the corresponding return path Bearer Connection. Handover is only completed once the flush PDU has completed the round trip. The originating MES Bearer Connection Manager MBCM, upon receipt of these messages, knows that there is no data held in any transmission buffers associated with the original Bearer Connection BC.

Integrity tests can be used to determine whether both Bearer Connections at the MES 2 and LES 14 are operational. Under the instruction of the MES Bearer Connection Manager MBCM , the originating Bearer Control BCT can insert a 'loopback' control message into the data PDU stream as it is passed down to the Bearer Control. This loopback PDU is looped back by the receiver. Upon receipt of this message the MES Bearer Connection Manager MBCM can deduce that the link integrity is confirmed.

The MES Bearer Connection Managers MBCM liaise between the Bearer Connections BC and the underlying MES Bearer Control Manager MBCTM when it is necessary to alter the capacity of the Bearer Connection BC or attach or detach the Bearer Connection BC from a Bearer Control BCT. They may employ a scoring algorithm so that if multiple Bearer Controls BCT are capable of supporting a Bearer Connection BC, they can select the preferred option. If insufficient resources appear to be available to support a Bearer Connection's request Quality of Service, they are able to appeal to the Bearer Connection Manager BCM to resolve this matter by consolidation of the Bearer resources. Similarly, they are capable of restricting the transfer of *revise* and *attach* messages to the underlying MES Bearer Control Manager MBCTM during periods of bandwidth contention.

The final function involved in Bearer Connection management is the Bearer Connection Manager BCM. This function creates and manages all of the MES Bearer Connection Managers MBCM, assigns the unique Bearer Connection IDs, and acts as an arbitration function when it is necessary to redistribute bearer resources between MES management instances. Associated with this role it may provide a MAC Connection sorting algorithm in order to efficiently pack MAC Connections within Bearer Connections BC so that redundant Bearer Connections can be removed. It also supports generic services which can be shared across the MES management instances such as the creation and operation of both Signalling and Broadcast Bearer Connections. The Bearer Connection Manager BCM also acts as a common signalling termination point for the MAC Layer, encapsulating and decoding the MAC Layer signalling messages that are transported across the data-link.

### Bearer Control Resource Management

The Bearer Control functions BCT efficiently multiplex multiple Bearer Connections SBC, BC within a shared access channel taking into account their dissimilar transport requirements, particularly their sensitivity to delay and its capacity. The Bearer Controls' resource management algorithm is capable of ascertaining what Bearer resources are required to sustain its Bearer Connection traffic. This is necessary so that the Bearer Control BCT can determine whether it is capable of accepting new Bearer Connection instances BC and, if so, under what circumstances. For example, the Bearer Control BCT may have to secure additional bandwidth prior to accepting the Bearer Connection BC. However, as with the Bearer Connection sub-layer management, the Bearer Control sub-layer management is controlled exclusively from the LES 14. It is only at the LES 14 that Bearer Controls BCT can decide the allocation of Bearer Connections BC onto the Shared Access Bearers SAB.

### Resource Management Example

Figure 7 shows four MAC/SAP Handler transmit buffers B 1 to B4 and how their MAC Connection data is placed within separate two Bearer Connections BC1, BC2 on an underlying Shared Access Bearer SAB. Only 20 kb/s is currently reserved for Bearer Connection 1 and a single delay sensitive connection and a delay insensitive connection multiplexed into this Bearer Connection BC1 are read at 10 kb/s each. However, due to the burstiness of the delay sensitive application causing it to receive data from the UDLL at a transient rate of 15 kb/s, its MAC/SAP Handler transmit buffer B1 starts to fill up. This is noted by the Bearer Connection BC1 which can either attempt to accommodate the transient increase in load locally or request additional resources via the MES Bearer Connection Manager MBCM.

First, the Bearer Connection BC1 could simply ignore the problem if it has already arranged for the delay sensitive MAC Connection to be read at a rate equal to or greater than its mean packet transfer rate. Given a large time window together with sufficiently large buffering capacity within the MAC/SAP Handler MSH, the data burst could be stored in the buffer and progressively emptied later during periods of relative inactivity from this UDLL call. Nevertheless, this requires large amounts of buffering to be employed (if data loss is to be minimised), and assumes that the data is relatively time-insensitive which is of course not the case for delay sensitive data. Flow control may also be used between the Bearer Connection BC1 and the MAC/SAP Handler MSH which in turn may be able to send flow control messages to the UDLL application, if this is supported. However this delay sensitive connection may anticipate being able to transmit data without interruption from the underlying transport mechanism irrespective of the state of the underlying bearer resources.

A second approach is for the Bearer Connection BC1 to exploit the fact that the delay insensitive service sharing the same Bearer Connection may be relatively tolerant to being "backed-off" and alter its scheduling behaviour to read from the delay sensitive queue more frequently at the expense of the delay insensitive queue. This option is illustrated in Figure 8. Here the delay sensitive buffer B 1 is now read at 15 kb/s whilst the delay insensitive buffer B2 is read at a reduced rate of 5 kb/s. This allows the delay sensitive buffer B1 to empty. However, the delay insensitive queue may now begin to grow accordingly. This may be considered acceptable, as there may be no specific loss or delay constraints imposed on some classes of delay insensitive connection.

Assuming the Bearer Connection BC1 cannot locally accommodate the MAC Connection's increased bandwidth demands with either of these two solutions the Bearer Connection BC1 may attempt to obtain additional capacity itself. This process is started by the Bearer Connection requesting the MES Bearer Connection Manager MBCM to secure additional bandwidth for the Bearer Connection BC. If the congestion is arising at an MES 2 this message must be sent across to the corresponding process on the LES 14 as it is only the LES 14 which can undertake resource management of the Bearer Connection sub-layer and below.

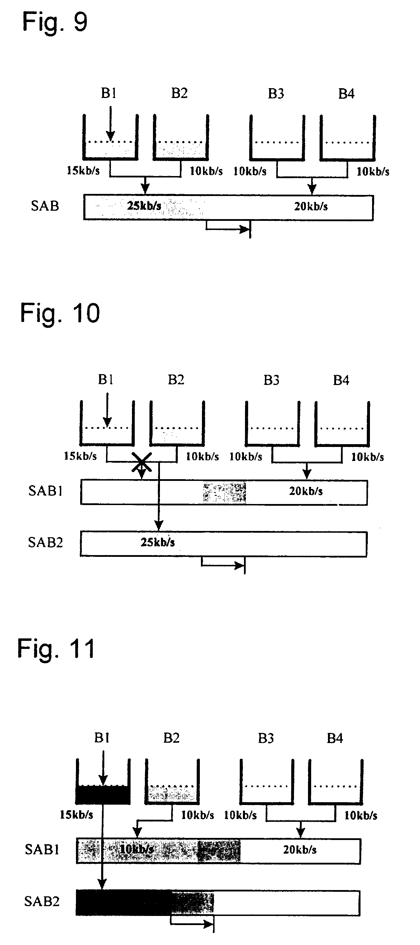

The LES-based MES Bearer Connection Manager MBCM uses a *revise* message to ask the MES Bearer Control Manager MBCTM to determine whether the Bearer Connection BC with its revised capacity can be accommodated on any suitable Bearer Control BCT. The preferred response for minimum disruption would be for the Bearer Control currently supporting the Bearer Connection BC to offer to increase the transmission resources allocated to it by the requested amount. If the MES Bearer Connection Manager MBCM accepts this offer the Bearer Controls BCT at either end of the LES-MES channel immediately increase the Bearer Connection PDU transfer rate so as to alleviate the problem. This approach is shown in Figure 9. The additional SAB resources have been allocated to the Bearer Connection BC, with the instantaneous Bearer Connection bandwidth increased to 25 kb/s, and the delay sensitive connection data transfer rate can be correspondingly increased to 15 kb/s.

It should be noted that the Bearer Connection BC is not informed of this revision in its instantaneous capacity and its notional Bearer Connection capacity remains fixed at the sum of the call level capacities agreed for all of its MAC Connections. Rather, the clock which governs the rate at which the Bearer Connection BC1 performs all of its actions, including transferring data to the transmit Bearer Control BCT, increases. The Bearer Control BC1 may additionally perform rescheduling to reduce the overloaded delay sensitive MAC Connection transmit buffer B1 more rapidly. Nevertheless, once the buffer B 1 reduces to a predefined level the Bearer Connection BC 1 must issue another *revise* message in order to relinquish this additional bandwidth.

However, if there is insufficient unassigned bandwidth available on the current SAB the solution may be to increase the Bearer Connection BC1 reading frequency of the delay sensitive MAC Connection buffer B1 and to move the Bearer Connection BC1 to a second Bearer SAB2 which can support its requested revised bandwidth as illustrated in Figure 10. This may require all of the MAC Connections belonging to the migrating Bearer Connection to be temporarily suspended (using flow control) whilst the move operation takes place.

Another approach is to move the MAC Connection to a different Bearer Connection BC (and possibly SAB) where sufficient bandwidth is either available or can be obtained. This is undertaken by the inter-working of the original parent Bearer Connection BC1, the revised Bearer Connection BC3 and the MES Bearer Connection Manager MBCM. This latter function is able to secure the necessary resources on the destination Bearer Connection BC3, and the original parent Bearer Connection BC1 can forward it the address of the MAC/SAP Handler as shown in Figure 11.

This approach may be more beneficial than that shown in Figure 10, as the disruption is limited to the MAC Connection which is experiencing the problem. However, its implementation requires the MES Bearer Connection Manager MBCM to obtain knowledge of the MAC Connection composition within each Bearer Connection BC (which is known by each of the Bearer Connections). Nevertheless, this scheme enables the MES Bearer Connection Manager MBCM to make efficient use of the finite Bearer resources and allows a consolidation mechanism to operate. For example, periodically triggered by the generic Bearer Connection Manager BCM on the LES 14, an MES Bearer Connection Manager MBCM could use this approach to try to progressively migrate its MAC Connections into fewer Bearer Connections BC and to, in turn, migrate these Bearer Connections BC onto a single Bearer Control BCT assuming multiple concurrent Bearer Controls are supported by the mobile. The consolidation of MAC connections into fewer Bearer Connections BC ensures that unnecessary proliferation of Bearer Connections BC resulting from the dynamic addition then removal of MAC Connections is avoided. This consolidation would tend to bias MES's with multiple transceivers to maintain all of their traffic on a single one and so reduce power consumption.

### Additional Bearer Types

One of the advantages of the MAC Layer is to allow additional Bearers and Bearer types to be accommodated with minimal changes to MAC Layer entities. This is achieved by the MAC Layer maintaining a 'loosely coupled' interface with the Bearer Controls BCT. In other words, all information about an entity is held exclusively within that entity, and any access to that entity is only through a defined interface. Provided that interface remains unaltered then any internal operations of the entity may be altered without affecting any other entities.

The knowledge as to whether or not a Bearer can accommodate a Bearer Connection BC is held within a Bearer Control BCT. Access to this knowledge is achieved by supporting a query mechanism - the MES Bearer Control Manager entities MBCM query each of the possible Bearer Controls BCT through the generic interface. Such an approach reduces the complexity of system upgrades to incorporate additional bearer types.

For example, an LES 14 currently supports Bearer Control type 1. An additional Bearer Control type 2 is to be added on an additional channel - Bearer Control type 2 is of a later improved design offering user advantages over type 1. An additional MES Channel Resource MCR is added which is capable of supporting type 2 and a software 'driver' for type 2 is loaded - this notifies the Bearer Connection Manager BCM of its existence.

Similarly an individual MES 2 is upgraded by loading the corresponding MES software driver for Bearer Control type 2 which notifies the MES Bearer Control Manager MBCTM of its existence. The MES 2 then signs on and the LES 14 is notified of the MES's new capability. Next time an MES connection is established, or a dynamic bandwidth change is negotiated, the MES Bearer Connection Manager MBCM at the LES 14 will query all possible Bearer Controls for the MES 2 i.e. both types 1 and 2. Type 2 might then offer a better option resulting in a higher score at the MES Bearer Connection Manager MBCM. Thus by maintaining the loose coupling only the new Bearer Control BCT need be added at the MES 2 and LES 14. The other MAC Layer entities do not require modification. Further whilst each connection or bandwidth change now results in two queries these queries all occur at the LES 14 where computational power is more easily provided.

The Bearer is responsible for providing framing support on top of the physical radio interface. Different Bearers must be employed in order to enable multiple framing formats to be used concurrently. This also implies that in the case of an MES 2 supporting a single Bearer, re-selection of a transmission frequency will require all active connections to be temporarily suspended whilst the Bearer is updated. To perform this hand-over type mechanism cleanly, the MES 2 and LES 14 employ a flow control mechanism.

The above embodiments have been described with reference to an object-oriented model. However, individual objects do not necessarily correspond to discrete circuitry; preferably, the objects are implemented on a single processing device or general purpose computer.

The above embodiments have been described with reference to a satellite communications system, but the techniques described therein could also be applied to terrestrial wireless communications systems.

## Claims

1. A method of allocating a plurality of data streams (MC) to at least one physical channel (SAB) in a wireless communication system, comprising:
grouping said plurality of data streams (MC) into a plurality of groups (BC) each comprising one or more of said data streams;
formatting each said group of data streams in packets including a group identifier (BH) uniquely identifying that group (BC); and
collectively determining the allocation of each of said groups (BC) to said at least one physical channel (SAB), such that said allocation of each said group (BC) is applied to all of the data streams (MC) comprising said group.

2. A method as claimed in claim 1, wherein each of said data streams (MC) is formatted in packets including a data stream identifier (MH) uniquely identifying packets comprising that data stream.

3. A method as claimed in claim 1 or claim 2, wherein said grouping step comprises selecting said one or more of said data streams (MC) for each of said groups (BC) according to a predetermined quality of service requirement for each of said data streams.

4. A method as claimed in claim 3, wherein said quality of service requirement includes a bandwidth requirement.

5. A method as claimed in claim 3, wherein said quality of service requirement includes a sensitivity to delay.

6. A method as claimed in any one of claims 3 to 5, wherein said quality of service requirement includes an encryption requirement.

7. A method as claimed in any one of claims 1 to 6, further comprising modifying the allocation of said data streams (MC) to said groups (BC) in response to a change in said data streams.

8. A method as claimed in any one of claims 1 to 7, further comprising modifying the allocation of at least one of said groups (BC) to said at least one physical channel (SAB) in response to a change in said data streams.

9. A method as claimed in claim 7 or claim 8, wherein said change in said data streams (MC) comprises an increase in bandwidth requirement for at least one of said data streams.

10. A method as claimed in claim 7 or claim 8, wherein said change in said data streams comprises the addition of a new data stream (MC).

11. A method as claimed in any one of claims 1 to 10, wherein there are a plurality of said physical channels (SAB), and at least one of said groups (BC) is allocated concurrently to more than one of said physical channels.

12. A method as claimed in any one of claims 1 to 11, further comprising:
determining a bandwidth allocation from said one or more physical channels (SAB) for each of said groups (BC), wherein said step of collectively determining the allocation of each of said groups is performed according to the bandwidth allocation of the respective group.

13. A method as claimed in any one of claims 1 to 12, comprising buffering each of said data streams (MC) in a respective data stream buffer (B) and, for each of said groups (BC) which comprises more than one data stream, multiplexing the data streams for that group by reading from the respective data stream buffers in a predetermined sequence.

14. A method as claimed in claim 13, further comprising varying said predetermined sequence in response to the level of the buffer (B) of one or more of the data streams exceeding a threshold, so as to reduce said level below said threshold.

15. A method as claimed in any one of claims 1 to 14, further comprising buffering the one or more data streams (MC) of each group (BC) in a respective group buffer (B), and for each said physical channel (SAB), reading data from the respective group buffer of each group allocated to that physical channel for output on that physical channel in a predetermined sequence according to the determined allocation of said group.

16. A method as claimed in any one of claims 1 to 15, wherein a respective group bandwidth is allocated to each of said groups (BC) and a respective data stream bandwidth is allocated to each of said data streams (MC), the method further comprising receiving a request to add an additional data stream with a requested bandwidth requirement, and selecting one or more of said groups for said additional data stream according to the available group bandwidth of each of said groups.

17. A method as claimed in claim 16, wherein a respective minimum data stream bandwidth is allocated to each of said data streams (MC), further comprising, if none of the groups (BC) has an available group bandwidth sufficient for said requested bandwidth requirement, reducing the allocated data stream bandwidth of at least one of said data streams to said respective minimum data stream bandwidth, and subsequently selecting one or more of said groups for said additional data stream according to the available group bandwidth of each of said groups.

18. A method as claimed in claim 17, wherein said step of reducing the allocated bandwidth comprises selecting one of said groups (BC) and reducing the allocated data stream bandwidth of each of the data streams (MC) allocated to said selected group to the respective minimum data stream bandwidth, and the subsequent selecting step includes determining whether the selected group (BC) subsequently has sufficient bandwidth for said requested bandwidth requirement.

19. A method as claimed in any one of claims 1 to 18, further comprising generating signalling information indicating the allocation of said data streams to said groups and of said groups to said physical channels (SAB), wherein one of said data streams comprises said signalling information.

20. A method of allocating a plurality of data streams (MC) to a plurality of physical channels (SAB) in a wireless communication system (2, 12, 14), comprising:
allocating each of said data streams (MC) to at least one of said physical channels (SAB) such that at least one of said data streams is allocated concurrently to more than one of said physical channels while another at least one of said data streams is allocated to only one of said physical channels.

21. A method of multiplexing a plurality of logical channels (MC; BC) onto a plurality of physical wireless communication channels (SAB), comprising:
continuously monitoring the collective bandwidth requirements of said logical channels and varying the allocation of said logical channels to said physical channels so that a minimum number of said physical channels necessary to satisfy said collective bandwidth requirements is used to carry said logical channels.

22. A method of multiplexing a plurality of logical channels (MC; BC) onto a plurality of physical wireless channels (SAB), wherein at least one of said physical channels is of a different channel type providing a different Quality of Service from that of another one of said physical channels, the method comprising:
allocating each of said logical channels to a selected one or more of said physical channels according to a Quality of Service requirement of that logical channel.

23. A method of multiplexing a plurality of logical channels (MC; BC) onto a group of physical wireless channels (SAB), the method comprising:
allocating each of said logical channels to a selected one or more of said group of physical channels according to a Quality of Service requirement of that logical channel,
varying the Quality of Service requirement of at least one of said logical channels,
determining whether the varied Quality of Service requirement can be supported by said physical channels, and, in response to a negative result of said determination,
adding one or more additional physical wireless channels to said group of physical wireless channels and repeating said allocating step.

24. An authentication method for determining whether to provide communication services to each of a plurality of wireless terminals (2), comprising:
transmitting respectively to each of said terminals (2) a unique signalling channel assignment signal, indicating to that terminal a duplex signalling channel uniquely assigned to that terminal;
transmitting to each of said terminals in said respective signalling channel a respective authentication request signal;
receiving from each of said terminals in said respective signalling channel a respective authentication response signal, the contents of which are dependent on the contents of the authentication request signal;
and determining whether to provide subsequent communication services to each of said terminals according to the contents of the authentication response signal received from that terminal.

25. A method as claimed in claim 24, further including:
receiving, on a contention-based access channel, registration request signals from said wireless terminals (2);
wherein each of said unique signalling channel assignment signals is transmitted to a respective one of said terminals in response to said registration request signal from that terminal.

26. A method of authentication for a wireless communications terminal (2), comprising:
receiving a signalling channel assignment signal indicating a duplex signalling channel uniquely assigned to that terminal;
receiving an authentication request signal on said signalling channel;
generating an authentication response signal on the basis of the content of said authentication request signal and identification information provided at the terminal; and
transmitting said authentication response signal.

27. A method as claimed in claim 26, further including, prior to said step of receiving a channel assignment signal,
transmitting, on a contention-based access channel, a registration request signal.

28. An authentication method for determining whether to provide communication services to each of a plurality of wireless terminals (2), comprising:
allocating to each of said terminals a respective control signalling channel with a respective quality of service which is variable from one said signalling channel to another;
and performing an authentication exchange with each of said terminals on the respective control signalling channels so as to determine whether to provide services to that terminal.

29. A method as claimed in claim 28, further including, if it is determined that services are to be provided to one or more of said terminals (2),
allocating to each of said one or more terminals at least one service channel for carrying service communications, wherein the quality of service of said at least one service channel is independent of the quality of service of the respective control signalling channel.

30. Apparatus arranged to perform the method as claimed in any preceding claim.

31. A satellite earth station including apparatus as claimed in claim 30.

32. A computer program arranged to perform the method as claimed in any one of claims 1 to 29 when executed by processing means.
